# FASCICULE DE BREVET EUROPEEN

(11) **EP 2 150 506 B1**
(45) Date de publication et mention de la délivrance du brevet: **21.09.2011**
(21) Numéro de dépôt: 08759930.4
(22) Date de dépôt: 22.05.2008
(51) Int. Cl.: C04B 20/06

(54) **PROCEDE DE FABRICATION D'UNE VERMICULITE FORTEMENT EXFOLIEE NE NECESSITANT PAS L'UTILISATION DE LIANT ORGANIQUE OU D'ADDITIF ORGANIQUE POUR ETRE MIS EN FORME**
VERFAHREN ZUR HERSTELLUNG VON HOCHGRADIG GEBLÄHTEM VERMICULIT OHNE VERWENDUNG EINES ORGANISCHEN BINDEMITTELS ODER ZUSATZES ZU DESSEN BILDUNG
METHOD FOR MAKING A HIGHLY EXFOLIATED VERMICULITE WITHOUT USING ANY ORGANIC BINDER OR ADDITIVE FOR FORMING THE SAME

(30) Priorité: 23.05.2007 FR 0755220
(43) Date de publication de la demande: 10.02.2010
(73) Titulaire: Commissariat à l'Énergie Atomique et aux Énergies Alternatives, 75015 Paris (FR); Garlock France SAS, 42000 Saint Etienne Cédex (FR)
(72) Inventeur: CAPLAIN, Philippe, F-26130 Saint Paul Trois Châteaux (FR); FUZELLIER, Hervé, F-54270 Essey-les-Nancy (FR); HUDRY, Damien, F-84000 Avignon (FR); REINERT, Laurence, F-38480 Saint Albin de Vaulserre (FR); JULIAA, Jean-François, F-26200 Montélimar (FR); LEFRANCOIS, Michel, F-42000 Saint Etienne (FR)
(74) Mandataire: Ilgart, Jean-Christophe
(86) Numéro de dépôt international: PCT/EP2008/056329
(87) Numéro de publication internationale: WO 2008/142144

(56) Documents cités:
- EP-A- 0 251 473
- WO-A-03/004578
- DE-C- 976 908
- US-A- 4 497 869
- MEISINGER ARTHUR C: "Pumice and pumicite : a chapter from mineral facts and problems" 1 janvier 1985 (1985-01-01), BUREAU OF MINES BULLETIN, PAGE(S) 917 - 922, VERMICULITE , XP008087628 cité dans la demande *page 919, exfoliation*
- DATABASE WPI Week 197423 Thomson Scientific, London, GB; AN 1974-42771V XP002508483 & JP 49 018717 B (TAKEDA CHEM IND LTD) 11 mai 1974 (1974-05-11)
- DATABASE WPI Week 199203 Thomson Scientific, London, GB; AN 1992-022792 XP002508484 & SU 1 629 270 A (NONMETALLIC ORE DES) 23 février 1991 (1991-02-23)

## Description

### DOMAINE TECHNIQUE

La présente invention a trait à un procédé de fabrication d'une vermiculite fortement exfoliée, ne nécessitant pas, pour être mise en forme, l'utilisation de liant organique ou d'additif organique, lesquelles vermiculites présentent à l'issue de ce procédé des performances mécaniques et chimiques non dégradées jusqu'à 1000°C.

Les vermiculites sont des argiles appartenant à la famille des phyllosilicates, c'est-à-dire des silicates s'organisant sous forme de feuillets. L'organisation des feuillets dans le cas des vermiculites est telle que les feuillets présentent une structure en forme d'accordéons.

Du fait de cette structure, les vermiculites sont susceptibles de piéger une grande quantité d'air et trouvent tout naturellement leur application dans le domaine de l'isolation thermique. Elles peuvent ainsi être utilisées comme isolant en vrac, notamment dans des plafonds, ou encore être incorporées dans des matériaux de construction, tels que le ciment ou des colles, afin d'assurer cette fonction isolante.

Un des domaines généraux de l'invention est donc celui de l'isolation thermique.

### ÉTAT DE LA TECHNIQUE ANTÉRIEURE

Un des matériaux phares dans le domaine de l'isolation thermique a été pendant de nombreuses années, l'amiante, qui se caractérise de plus par un très haut degré d'ininflammabilité.

L'amiante est un silicate de calcium et de magnésium de nature fibreuse, qui a la capacité de se déliter en particules microscopiques susceptibles d'être inhalées et d'atteindre les alvéoles pulmonaires, voire la plèvre, ce qui rend cette inhalation particulièrement pathogène. C'est ainsi que depuis 1997, l'amiante a été interdite de fabrication et de commercialisation en France.

Ainsi, les industriels ont pensé remplacer l'amiante par d'autres silicates non susceptibles de se déliter en particules microscopiques. C'est le cas notamment de la plupart des phyllosilicates, qui ne présentent plus une structure fibreuse comme l'amiante mais une structure en feuillets.

Plus précisément, les phyllosilicates représentent une large famille de silicates, dans laquelle les tétraèdres de SiO₄ sont liés les uns aux autres et forment des feuillets infinis bi-dimensionnels et sont condensés avec des octaèdres de MgO ou de AlO dans un rapport 2 : 1 ou 1 : 1, certains des éléments pouvant être l'objet d'une substitution isomorphe (Si pouvant être substitué, en partie, par Al dans les tétraèdres ; Al, Fe et/ou Mg pouvant occuper les mêmes sites des octaèdres). Les centres des tétraèdres et des octaèdres sont occupés par des cations de degré d'oxydation +4 ou inférieur (Si⁴⁺, Al³⁺, Mg²⁺), de telle sorte que la charge du feuillet soit négative.

Lorsque les tétraèdres et les octaèdres sont condensés selon un rapport 2 :1, cela signifie, en d'autres termes, que, dans un feuillet, une couche octaédrique est prise en sandwich entre deux couches tétraédriques (cette organisation étant également dénommée « empilement de type TOT »). Certains de ces phyllosilicates 2 :1, dont la charge des feuillets calculée sur une demi-maille est comprise entre 0,6 et 0,9 sont dénommés vermiculites. Un feuillet est séparé d'un autre feuillet identique par un espace interfoliaire occupé par des cations hydratés (cations alcalins, alcalino-terreux, cations ferriques/ferreux..), dont les charges positives viennent compenser les charges négatives présentes à la surface des feuillets. Ces cations sont liés aux feuillets par des liaisons faibles du type Van der Waals.

Les vermiculites du fait de leurs structures en feuillets et en accordéons (si elles sont exfoliées), sont particulièrement attractives en terme d'isolation thermique, car cette structure ménage un nombre considérable de cellules susceptibles de piéger de l'air. Qui plus est, il est possible, en appliquant des traitements appropriés, de procéder à une exfoliation des feuillets, c'est-à-dire à une augmentation significative de la distance interfoliaire, ce qui permet d'augmenter la capacité d'accueil de l'air dans ce type de structure.

Différents types de procédé de fabrication de vermiculite exfoliée ont été mis en oeuvre ces dernières années.

Ainsi, une vermiculite exfoliée peut être obtenue par un chauffage rapide entre 800 et 1100°C, tel que l'expose Meisinger dans « Minéral Facts and Problems », Vol.675, 1985, ed. US department of the Interior Bureau of Mines Washington, pages 917-922. Le mécanisme est d'origine mécanique. L'augmentation brutale provoque une vaporisation de l'eau interfoliaire conduisant à une séparation des feuillets. Ce type de procédé est connu sous le nom d'exfoliation mécanique. Il permet une augmentation de volume d'un facteur de 12 à 18.

D'autres auteurs ont pratiqué une exfoliation des vermiculites en mettant celles-ci en contact avec une solution aqueuse de peroxyde d'hydrogène. Le mécanisme est basé sur la substitution de molécules d'eau par des molécules de peroxyde d'hydrogène (réaction d'intercalation). Ces dernières, en se décomposant dans l'espace interfoliaire sous forme d'oxygène et d'eau, conduisent à l'écartement des feuillets. Ce type de procédé est connu sous le nom d'exfoliation chimique. Une augmentation de volume des particules est observée avec des facteurs d'expansion de 150 à 200.

WO 03004578 décrit une vermiculite exfoliée par voie chimique préparée de la façon suivants :
- une vermiculite brute non exfoliée est d'abord traitée en la mettant en contact avec une solution aqueuse saturée de chlorure de sodium, afin de substituer les ions magnésium et créer une vermiculite homoionique ;
- la vermiculite homoionique ainsi obtenue est mise en contact avec une solution comprenant des ions n-C₄-H₃NH₃ pour remplacer les ions sodium par des ions n-C₄-H₃NH_{3 ;}
- enfin, la vermiculite est soumise à un simple lavage à l'eau pour parachever l'exfoliation.

La mise en forme de ces vermiculites n'est toutefois possible qu'en utilisant un liant organique du type polymérique, qui va assurer l'agglomération des particules de vermiculite.

Du fait de la présence de ce liant polymérique, les vermiculites décrites ci-dessus, qui subissent une modification importante de structure dès 300°C et perdent ainsi leurs caractéristiques mécaniques ne peuvent être utilisées dans des applications soumises à des températures supérieures à 450°C.

Il existe donc un véritable besoin pour un procédé de mise en oeuvre simple permettant l'obtention d'une vermiculite fortement exfoliée pouvant être mise en forme sans nécessiter de recourir à un liant organique et pouvant être utilisée dans des applications susceptibles d'être soumises à des températures pouvant aller jusqu'à 1000°C.

### EXPOSÉ DE L'INVENTION

Ainsi l'invention a trait, selon un premier objet, à un procédé de préparation d'une vermiculite exfoliée comprenant successivement les étapes suivantes :
- une étape de chauffage d'une vermiculite hydratée non exfoliée à une température allant de 400 à 600°C pendant une durée allant de 3 heures à 7 heures, générant ainsi une vermiculite déshydratée ;
- une étape de mise en contact de la vermiculite déshydratée avec une solution comprenant un agent d'intercalation apte à se dégrader en générant au moins un gaz.

Cette étape de chauffage dans la gamme de température et de durée précitées est particulièrement importante, car elle permet d'obtenir une déshydratation optimale qui s'accompagne d'une séparation des feuillets libérant ainsi l'espace interfoliaire. L'espace interfoliaire ainsi vacant peut accueillir l'agent d'intercalation de façon accélérée et optimale. L'agent d'intercalation se dégradant sous forme de gaz va permettre, grâce à la libération de ces gaz, une séparation encore plus importante des feuillets.

Qui plus est, du fait de l'élimination optimale des molécules d'eau de l'espace interfoliaire, l'agent d'intercalation est mis en contact avec les feuillets sans subir de dilution par l'eau interfoliaire, ce qui augmente considérablement l'efficacité de cet agent d'intercalation.

La vermiculite hydratée non exfoliée pouvant être utilisée comme vermiculite de départ peut être une vermiculite se présentant sous forme de paillettes de longueur et largeur moyennes de l'ordre du centimètre, d'épaisseur généralement inférieure au millimètre et présentant une distance interplanaire mesurée par diffraction des rayons X de l'ordre de 12,1 Å. Une des vermiculites répondant à ces critères est une vermiculite issue de la mine de Palabora en Afrique du Sud.

Comme mentionné précédemment, l'agent d'intercalation selon l'invention est un agent apte à se décomposer au moins sous forme d'un gaz. Un agent d'intercalation extrêmement efficace selon l'invention est l'eau oxygénée H₂O₂, lequel se décompose en H₂O et en O₂, le dégagement d'oxygène contribuant à un éloignement des feuillets, et donc à une exfoliation.

D'un point de vue pratique, la mise en contact avec une solution comprenant un agent d'intercalation consiste généralement en une immersion des vermiculites déshydratées préalablement de 400°C à 600°C pendant 3 à 7 heures dans ladite solution. Les vermiculites déshydratées présentent une diminution de leur distance interplanaire qui tend vers la valeur de 10 Å atteinte pour un traitement thermique à 800°C.

Lorsque l'agent d'intercalation est l'eau oxygénée, la solution utilisée peut être une solution présentant une concentration allant de 35% à 50% en poids d'eau oxygénée. Cette étape de mise en contact peut être réalisée à une température allant de 20 à 100°C, le chauffage étant notamment important pour augmenter la cinétique de décomposition de l'agent d'intercalation.

Avec une telle solution d'eau oxygénée, et ce quelle que soit la concentration, un gonflement significatif est déjà observable au bout d'une heure d'immersion pour une vermiculite déshydratée à 400°C pendant 7 heures, le gonflement atteignant son maximum au bout de 12 heures d'immersion. Une déshydratation à 600°C dans les mêmes conditions conduit à une exfoliation maximale en 1 heure. Pour ces deux températures de prétraitement, l'intercalation de l'eau oxygénée conduit à l'apparition d'une vermiculite présentant une distance interplanaire, par exemple, supérieure à 100 Å.

Dans les deux cas, le phénomène s'accompagne d'un gonflement spectaculaire. Le volume apparent des paillettes de vermiculite est multiplié par un facteur 600 environ. Lorsque la vermiculite brute (c'est-à-dire n'ayant pas subi de traitement thermique conforme à l'invention) est immergée dans une solution d'eau oxygénée dans des conditions expérimentales similaires en concentration et en durée, une augmentation apparente de volume n'est visible qu'au bout de 10 heures et n'est complète qu'au bout de 24 heures. Qui plus est, l'augmentation de volume observée est ensuite 3 fois plus faible que pour des vermiculites ayant subi un prétraitement thermique conforme à l'invention.

Ce phénomène de mise en contact d'une vermiculite avec une solution d'agent d'intercalation, tel que H₂O₂, correspond à une exfoliation chimique.

Précisons l'importance de ne pas prétraiter thermiquement les vermiculites à une température dépassant 700°C, car dans cette gamme de températures, les vermiculites ainsi déshydratées ne peuvent plus subir d'exfoliation chimique avec un agent d'intercalation, tel que H₂O₂. Sans être lié par aucune théorie, ceci peut être corrélé à une modification chimique des extrémités des feuillets, l'élimination des groupements hydroxyles engendrant un rapprochement des feuillets et une condensation de leurs extrémités, ce qui diminue fortement l'accessibilité et la diffusion des molécules d'agent d'intercalation.

Les vermiculites obtenues à l'issue du procédé de l'invention présentent avantageusement, une surface spécifique allant de 100 à 220 m².g⁻¹, le maximum étant obtenu pour un échantillon de vermiculite brute, dans un premier temps, chauffé à 600°C pendant 7 heures et immergé pendant 1 heure dans une solution d'eau oxygénée à 50%. Une telle surface spécifique traduit une séparation des feuillets en paquets d'environ 7 à 8 unités, la surface spécifique de la vermiculite brute étant d'environ 10 m².g⁻¹. Les particules de vermiculite exfoliée présentent généralement une taille moyenne de particules allant de 6 µm et 50·µm. Les particules les plus fines sont notamment obtenues, lorsque le traitement d'exfoliation chimique est couplé avec un traitement ultrasonore.

Ainsi, l'invention a trait, selon un second objet, à des vermiculites susceptibles d'être obtenues par un procédé tel que défini ci-dessus.

Les vermiculites obtenues sont des vermiculites malléables, présentant notamment des propriétés mécaniques de mise en forme, de compressibilité et de restitution élastique.

Les vermiculites obtenues peuvent être mises en forme par recompression.

Ces vermiculites peuvent être utilisées dans de nombreux domaines, telles que la construction, l'isolation, les revêtements ou pour d'autres applications plus spécifiques, telles que la mécanique, les amortisseurs, les bétons légers, les matériaux de construction, de protection contre les incendies, les matériaux d'emballage pour le transport des liquides dangereux, la fabrication de capteurs solaires thermiques et comme nanocomposites pour films et revêtements.

L'invention a trait, selon un troisième objet, à un procédé de fabrication d'un matériau comprimé comprenant :
- une étape de mise en oeuvre du procédé de préparation d'une vermiculite exfoliée tel que défini ci-dessus ; et
- une étape de mise en forme par compression de la vermiculite obtenue à l'étape précédente,
la mise en forme étant réalisée, avantageusement, en l'absence de liant organique.

La faculté d'un matériau sous forme de paillettes, telles que les vermiculites de l'invention, à pouvoir être recomprimé dépend de deux facteurs : la taille des particules et la teneur en eau.

Les vermiculites obtenues après l'étape de mise en contact avec une solution d'agent d'intercalation peuvent être soumises, avant l'étape de mise en forme, à une étape de broyage, de préférence, mécanique, ce broyage pouvant être réalisé par un mortier, un broyeur à couteaux, un broyeur à boulets, ou par ultra-sons, suivi éventuellement d'un tamisage, afin de sélectionner la fraction granulométrique de particules de taille apte à être facilement recomprimée. Il peut s'agir de particules de taille allant de 63 à 500 µm, obtenues par broyage avec des broyeurs mécaniques. Il peut s'agir également de particules de taille inférieure à 10 µm, notamment lorsque le broyage est réalisé par ultrasons (par exemple à une fréquence allant de 20 à 40 kHz).

La teneur en eau est également un facteur important pour la mise en forme des vermiculites, l'eau provenant de la solution d'agent d'intercalation et éventuellement de la dégradation de celui-ci.

En effet, un matériau mis en forme comportant de l'eau résiduelle risquerait de subir des phénomènes de retrait importants, s'il est soumis à des applications entraînant une exposition à des températures élevées.

Il peut être ainsi avantageux de soumettre les vermiculites obtenues par le procédé de l'invention, après l'étape de mise en contact avec la solution d'agent d'intercalation ou après l'éventuelle étape de broyage, et avant l'étape de mise en forme, à une étape de chauffage à une température allant de 700 à 800°C pendant une durée pouvant aller de 1 à 14 heures (dite étape de post-chauffage).

Les vermiculites peuvent être soumises à une recompression sous forme d'un mélange comprenant des vermiculites ayant subi une étape dite de post-chauffage, telle que définie ci-dessus, et des vermiculites n'ayant pas subi cette étape.

Après l'éventuelle étape de post-chauffage et avant l'étape de mise en forme, la vermiculite sous forme de particules peut être soumise à une étape de réhumidification, par exemple, en mettant en contact ladite vermiculite avec de l'eau, de préférence distillée, à une teneur pouvant aller de 0,2 mL à 0,5 mL pour 100 mg de poudre, par exemple une teneur de 0,25 mL pour 100 mg de poudre, l'eau servant à faciliter le lien entre les particules de vermiculite.

Les particules de vermiculite une fois mises en forme sont ensuite séchées à une température de 40°C à 80°C pendant une durée pouvant aller de 12 heures à 24 heures, par exemple à 40°C pendant 24 heures, pour donner un matériau mis en forme comprimé et sec. Le matériau à l'issue du séchage présente des propriétés mécaniques nettement supérieures à celles obtenues par compression des particules sèches de vermiculites, c'est-à-dire des particules n'ayant pas subi d'étape de réhumidification.

Sans être lié à une quelconque théorie, l'eau ajoutée lors de l'étape de réhumidification, permettrait par formation de liaisons hydrogène avec les groupes -OH au bord des feuillets de l'argile, d'améliorer l'empilement des particules de vermiculite lors de la compression. Lors de l'étape de séchage subséquente à l'étape de réhumidification, des liaisons hydrogène créées entre les groupes -OH de bord de feuillet des particules de vermiculite ainsi rapprochées permettraient au matériau de conserver ses propriétés mécaniques.

En sus et place de l'étape de réhumidification, il peut être prévu de mettre en contact la vermiculite sous forme de particules avec une solution dite « pontante » comprenant des éléments choisis parmi l'aluminium et le silicium.

Lorsque la solution dite pontante est à base d'aluminium, elle peut être préparée par dissolution de chlorure d'aluminium (AlCl₃, 6H₂O) dans de l'eau distillée à une concentration tel que [Al³⁺]= 0,2 mol.L⁻¹. La solution obtenue est hydrolysée par ajout d'hydroxyde de sodium sous agitation, la concentration en ions OH⁻ étant égale à 0,2 mol.L⁻¹ l'ajout étant maintenu jusqu'à obtention d'un rapport molaire OH⁻/Al³⁺ égal à 2. La solution résultante est ensuite mise au repos pendant 48 heures dans un récipient clos à température ambiante, jusqu'à obtention d'un sol contenant le macrocation « Al₁₃⁷⁺ », résultant de la polycondensation des espèces en solution, le temps nécessaire pour obtenir la polycondensation pouvant être déterminée par résonance magnétique nucléaire de ²⁷Al. Le sol est ensuite ajouté goutte-à-goutte à la vermiculite, éventuellement mise en suspension aqueuse (à raison par exemple de 2,5% en poids) à raison par exemple de 4.10⁻³ moles d'aluminium par gramme d'argile. L'ensemble résultant est laissé sous agitation pendant 30 minutes à température ambiante, pour permettre le greffage du macrocation « Al₁₃⁷⁺ » sur les bords des feuillets, par fixation sur les groupements -OH de surface. Après filtration, élimination des chlorures par lavage à l'eau et séchage (par exemple à 40°C pendant 24 heures), le matériau peut être facilement mis en forme par compression. Une calcination ultérieure (par exemple à 700°C pendant 2 heures) permet de convertir le macrocation en alumine, assurant la cohésion entre les feuillets, ce qui permet une bonne tenue du matériau mis en forme.

D'une façon générale, le matériau, une fois mis en forme, peut subir une étape de chauffage à une température allant de 500°C à 800°C, par exemple 700°C, et ce afin d'améliorer la cohésion.

L'invention va maintenant être décrite par rapport à l'exemple suivant donné à titre illustratif et non limitatif.

### Exemple

Dans un premier temps, 2 g de vermiculite « Large Grade » sont placés dans un bécher de 250 mL et sont lavés avec 100 mL d'eau osmosée pendant 30 minutes. Puis le solide humide subit une déshydratation en étant placé brusquement à 400°C, au four, pendant 7 heures sous air dans un creuset en alumine. Enfin la vermiculite déshydratée est refroidie jusqu'à la température ambiante dans un dessicateur contenant du silicagel et est ensuite exfoliée chimiquement par immersion dans 100 mL d'eau oxygénée à 35% en masse pendant une heure. Le produit obtenu est ensuite séché au four à 40°C pendant 14 heures et broyé manuellement au mortier.

Dans un deuxième temps, l'on prépare une solution pontante à base d'aluminium. Pour ce faire, une solution de chlorure d'aluminium à 0,2 mol.L⁻¹ en cations et une solution de soude 0,2 mol.L⁻¹ sont préparées en dissolvant les quantités adéquates de AlCl₃, 6H₂O et de NaOH dans de l'eau distillée. La solution de soude est ajoutée goutte à goutte sous agitation à la solution de AlCl₃ jusqu'à obtenir un rapport OH/Al égal à 2. Puis, la solution obtenue est vieillie à température ambiante, pendant 48 heures à l'abri de toute contamination et sans agitation mécanique, afin d'obtenir le macrocation Al₁₃⁷⁺.

Dans un troisième temps, la vermiculite exfoliée chimiquement est ensuite mise en suspension dans de l'eau distillée. La solution pontante préparée précédemment est ajoutée goutte à goutte, sous agitation, de manière à obtenir 4 millimoles d'aluminium par gramme de vermiculite. La solution obtenue est ensuite agitée pendant 30 minutes à température ambiante afin d'homogénéiser la suspension puis elle est filtrée. La vermiculite issue de la filtration est lavée, afin d'éliminer les ions chlorure. La vermiculite obtenue est ensuite calcinée pendant 2 heures à 700°C, afin d'oxyder les cations aluminium. Un broyage manuel est ensuite assuré, afin de redisperser les agglomérats formés lors de la calcination. Enfin, les poudres obtenues sont mises sous forme de pastilles sous une pression de 180 bars avec ajout d'eau.

## Revendications

1. Procédé de préparation d'une vermiculite exfoliée comprenant successivement les étapes suivantes :
- une étape de chauffage d'une vermiculite hydratée non exfoliée à une température allant de 400 à 600°C pendant une durée allant de 3 heures à 7 heures, générant ainsi une vermiculite déshydratée;
- une étape de mise en contact de la vermiculite déshydratée avec une solution comprenant un agent d'intercalation apte à se dégrader en générant au moins un gaz.

2. Procédé de préparation d'une vermiculite exfoliée selon la revendication 1, dans lequel l'agent d'intercalation est l'eau oxygénée.

3. Procédé de préparation d'une vermiculite selon la revendication 2, dans lequel l'eau oxygénée est présente dans une solution à une concentration allant de 35% à 50% en poids.

4. Procédé de préparation d'une vermiculite exfoliée selon l'une quelconque des revendications précédentes, dans lequel l'étape de mise en contact est réalisée à une température allant de 20°C à 100°C.

5. Procédé de fabrication d'un matériau comprimé comprenant :
- une étape de mise en oeuvre du procédé de préparation d'une vermiculite exfoliée tel que défini selon l'une quelconque des revendications 1 à 4 ; et
- une étape de mise en forme par compression de la vermiculite obtenue à l'étape précédente.

6. Procédé de fabrication d'un matériau comprimé selon la revendication 5, dans lequel l'étape de mise en forme ne nécessite pas l'utilisation de liant organique.

7. Procédé de fabrication selon la revendication 5 ou 6, comprenant avant l'étape de mise en forme une étape de broyage de ladite vermiculite.

8. Procédé de fabrication selon l'une quelconque des revendications 5 à 7, comprenant, après l'éventuelle étape de broyage et avant l'étape de mise en forme, une étape de chauffage à une température allant de 700 à 800°C pendant une durée pouvant aller de 1 à 14 heures.

9. Procédé de fabrication selon la revendication 7 ou 8, comprenant après l'éventuelle étape de chauffage et avant l'étape de mise en forme, une étape de réhumidification avec de l'eau distillée ou de mise en contact avec une solution dite « pontante » comprenant des éléments choisis parmi l'aluminium et le silicium.

10. Procédé de fabrication selon l'une quelconque des revendications précédentes, comprenant, après l'étape de mise en forme, une étape de chauffage à une température allant de 500°C à 800°C.

## Claims

1. A method for preparing an exfoliated vermiculite comprising successively the following steps:
- a step of heating a non-exfoliated hydrated vermiculite at a temperature extending from 400 to 600°C for a period extending from 3 hours to 7 hours, in this way generating a dehydrated vermiculite;
- a step of contacting the dehydrated vermiculite with a solution containing an intercalating agent capable of decomposing while generating at least one gas.

2. The method for preparing an exfoliated vermiculite as claimed in claim 1, **characterized in that** the intercalating agent is hydrogen peroxide.

3. The method for preparing a vermiculite as claimed in claim 2, **characterized in that** hydrogen peroxide is present in a solution at a concentration extending from 35% to 50% by weight.

4. The method for preparing an exfoliated vermiculite as claimed in any one of the preceding claims, **characterized in that** the contacting step is carried out at a temperature extending from 20 to 100°C.

5. The method for producing a compressed material comprising:
- a step of putting into practice the method for preparing an exfoliated vermiculite as defined in any one of claims 1 to 4; and
- a step of forming the vermiculite obtained in the previous step, by compression.

6. The method for producing a compressed material as claimed in claim 5, **characterized in that** the forming step does not require the use of an organic binder.

7. The production method as claimed in claim 5 or 6, including a step of grinding said vermiculites before the forming step.

8. The production method as claimed in any one of claims 5 to 7, including, after any grinding step and before the forming step, a step of heating at a temperature extending from 700 to 800°C for a period that may extend from 1 to 14 hours.

9. The production method as claimed in either of claim 7 or 8, including, after any heating step and before the forming step, a step of rehumidification with distilled water or of contacting with a solution called a "bridging solution" containing elements chosen from aluminum and silicon.

10. The production method as claimed in any one of the preceding claims, comprising, after the forming step, a step of heating to a temperature extending from 500°C to 800°C.

## Patentansprüche

1. Verfahren zur Herstellung von geblähtem Vermiculit, welches nacheinander die folgenden Schritte umfasst:
- einen Schritt des Erwärmens eines nicht geblähten hydratisierten Vermiculits bei einer Temperatur im Bereich von 400 bis 600°C für eine Dauer im Bereich von 3 Stunden bis 7 Stunden, um so einen dehydratisierten Vermiculit zu erhalten;
- einen Schritt des Inkontaktbringens des dehydratisierten Vermiculits mit einer Lösung, die ein Interkalationsmittel umfasst, das dazu fähig ist, sich zu zersetzen, wobei mindestens ein Gas erzeugt wird.

2. Verfahren zur Herstellung von Vermiculit gemäß Anspruch 1, wobei das Interkalationsmittel Wasserstoffperoxid ist.

3. Verfahren zur Herstellung von geblähten Vermiculit gemäß Anspruch 2, wobei das Wasserstoffperoxid in einer Lösung mit einer Konzentration im Bereich von 35 Gewichts-% bis 50 Gewichts-% vorhanden ist.

4. Verfahren zur Herstellung von geblähtem Vermiculit gemäß einem der vorhergehenden Ansprüche, wobei der Schritt des Inkontaktbringens bei einer Temperatur im Bereich von 20°C bis 100°C durchgeführt wird.

5. Verfahren zur Herstellung eines komprimierten Materials, umfassend
- einen Schritt der Durchführung des Verfahrens zur Herstellung eines geblähten Vermiculits, wie in einem der Ansprüche 1 bis 4 definiert; und
- einen Schritt des Formens des im vorhergehenden Schritt erhaltenen Vermiculits mittels Kompression.

6. Verfahren zur Herstellung eines komprimierten Materials gemäß Anspruch 5, wobei der Schritt des Formens nicht die Verwendung eines organischen Bindemittels erfordert.

7. Verfahren zur Herstellung gemäß Anspruch 5 oder 6, welches vor dem Schritt des Formens einen Schritt der Zerkleinerung des Vermiculits umfasst.

8. Verfahren zur Herstellung gemäß einem der Ansprüche 5 bis 7, welches nach dem möglichen Schritt der Zerkleinerung und vor dem Schritt des Formens einen Schritt der Erwärmung bei einer Temperatur im Bereich von 700 bis 800°C für eine Dauer, die im Bereich von 1 bis 14 Stunden liegen kann, umfasst.

9. Verfahren zur Herstellung gemäß Anspruch 7 oder 8, welches nach dem möglichen Schritt des Erwärmens und vor dem Schritt des Formens einen Schritt der Rückbefeuchtung mit destilliertem Wasser oder des Inkontaktbringens mit einer Lösung, die "Brückenlösung" genannt wird, welche Elemente umfasst, die aus Aluminium und Silizium ausgewählt sind, umfasst.

10. Verfahren zur Herstellung gemäß einem der vorhergehenden Ansprüche, welches nach dem Schritt des Formens einen Schritt des Erwärmens bei einer Temperatur im Bereich von 500°C bis 800°C umfasst.
